# EUROPÄISCHE PATENTSCHRIFT

(11) **EP 0 765 898 B1**
(45) Veröffentlichungstag und Bekanntmachung des Hinweises auf die Patenterteilung: **15.12.1999**
(21) Anmeldenummer: 96113512.6
(22) Anmeldetag: 23.08.1996
(51) Int. Cl.: C08J 3/12, C04B 24/26

(54) **Dispersionspulver für Baustoffe mit geringem Luftporengehalt**
Dispersion powder for building materials with a low content of air pores
Poudre de dispersion pour matériaux de construction à faible teneur en pores d'air

(30) Priorität: 02.09.1995 DE 19532426
(43) Veröffentlichungstag der Anmeldung: 02.04.1997
(73) Patentinhaber: Clariant GmbH, 65929 Frankfurt am Main (DE)
(72) Erfinder: Hess, Stefan, Dr., 64521 Gross-Gerau (DE); Schottler, Michael, 65474 Bischofsheim (DE); Schmitz, Ludwig, Dr., 67227 Frankenthal (DE)

(56) Entgegenhaltungen:
- EP-A- 0 601 518
- DE-A- 2 164 256
- US-A- 4 157 998
- PATENT ABSTRACTS OF JAPAN vol. 018, no. 371 (C-1224), 13.Juli 1994 & JP 06 100344 A (DENKI KAGAKU KOGYO KK), 12.April 1994,
- PATENT ABSTRACTS OF JAPAN vol. 010, no. 172 (C-354), 18.Juni 1986 & JP 61 021137 A (MITSUI TOATSU KAGAKU KK), 29.Januar 1986,

## Beschreibung

Die vorliegende Erfindung betrifft Dispersionspulver, die gesättigte Carbonsäureester enthalten, Verfahren zu deren Herstellung sowie deren Verwendung zur Modifizierung von Baustoffen.

Es ist seit längerem bekannt, daß polymermodifizierte Mörtel und Betone im Gegensatz zu nicht-modifizierten Mörteln und Betonen ein deutlich verbessertes Eigenschaftsprofil zeigen. Dabei sind insbesondere eine erhöhte Biegezug- und Druckfestigkeit zu nennen, wobei die erhöhte Druckfestigkeit auf eine durch die Polymermodifikation verursachte Reduktion des Wasser/Zement-Wertes zurückzuführen ist. Des weiteren findet sich in polymermodifizierten Mörteln und Betonen eine verbesserte Haftzugfestigkeit. Die Polymermodifikation in geringen Mengen verbessert darüber hinaus durch eine verringerte Wasseraufnahme die Frost-Tau-Beständigkeit des modifizierten Mörtels oder Betons. Eine ausführliche Beschreibung der genannten Eigenschaften findet sich beispielsweise in der Druckschrift "Dispersionsbaustoffe" von E.W. Nägele. Die Zugabe des Polymers erfolgt dabei entweder in Dispersionsform bei Zweikomponentensystemen oder in Pulverform bei Einkomponentensystemen.

Nachteilig bei entsprechend polymermodifizierten Mörteln und Betonen ist jedoch die Tatsache, daß durch die Modifikation ein erhöhter Lufteintrag in den Mörtel stattfindet. Dabei kann der Luftgehalt im polymermodifizierten Mörtel um bis zu 20% höher liegen als im unmodifizierten Mörtel. Die Luftaufnahme im Mörtel ist verbunden mit negativen Auswirkungen auf die oben genannten Eigenschaften. So fallen die Biegezugfestigkeit, Druckfestigkeit und Haftungsfestigkeit mit zunehmendem Luftgehalt merklich ab. Durch die erhöhte kapillare Saugfähigkeit wird außerdem die Wasseraufnahme erhöht und damit letztlich die Frost-Tau-Beständigkeit verschlechtert.

Um den Luftgehalt niedrig zu halten, müssen daher spezielle Entschäumer zur Mörtelmischung zugesetzt werden. Für hydraulisch abbindende Systeme haben sich besonders Entschäumer auf Silikon-, Öl- oder Kohlenwasserstoffbasis bewährt. In der Regel werden bei Zweikomponentensystemen flüssige Entschäumer zur Dispersion zugegeben. Für Einkomponentensysteme gibt es Entschäumer auf Pulverbasis, die der trockenen Mörtelmischung zugesetzt werden.

Soll der Entschäumer jedoch bereits im Dispersionspulver vorliegen, tritt häufig das Problem auf, daß die zu der Dispersion hinzugegebenen bekannten Entschäumer nach der Sprühtrocknung der Dispersion in der dann aus dem Dispersionspulver hergestellten Redispersion keine oder nur eine stark verminderte Entschäumerwirkung zeigen.

In der Offenlegungsschrift DE-A 21 64 256 finden sich als Zusatzstoffe zur Plastifizierung von Kunstharzdispersionen Ester, die aus gesättigten, verzweigten, einfach oder mehrfach ungesättigten Fettsäuren und Alkoholen bestehen. Durch Zugabe dieser Additive wird bei der Verfilmung ein sehr dichter Polymerfilm erhalten. Das Additiv diffundiert vollständig in die Kunstharzlatex und wirkt dort ausschließlich als Weichmacher, so daß zusätzlich der Einsatz spezieller Entschäumer erforderlich ist.

Die europäische Patentschrift EP-B 0 145 685 empfiehlt den Einbau von Stearylmethacrylat als Comonomer in Kunstharzdispersionen zur Hydrophobierung von Mörtel- und Betonmassen. Hierbei wird als Vorteil gegenüber anderen Kunstharzdispersionen betont, daß durch die Zugabe der erfindungsgemäßen Kunstharzdispersion gegenüber niedermolekularen Additiven eine Verbesserung der Reproduzierbarkeit der Kapillar- und Luftporenstruktur erreicht wird. Die kovalente Anbindung der langkettigen Alkylgruppen führt dabei jedoch nicht unbedingt zu einer Verringerung des Luftgehalts.

Aufgabe der vorliegenden Erfindung war es daher, ein Dispersionspulver zur Verfügung zu stellen, das nach Herstellung einer Redispersion in Mörtel- oder Betonmischungen eine entschäumende Wirkung zeigt und zusätzlich den Luftgehalt in diesen Mörtel- oder Betonmischungen reduziert.

Die Aufgabe wurde gelöst, indem homo- oder copolymere Schutzkolloid-stabilisierte Vinylester- beziehungsweise (Meth)acrylat-Dispersionen mit gesättigten Carbonsäurestern der allgemeinen Formel CₙH₍₂ₙ₊₁₎COOCₘH₍₂ₘ₊₁₎ mit n = 5 bis 22 und m = 1 bis 8 zu Dispersionspulvern verarbeitet werden.

Gegenstand der Erfindung ist ein Dispersionspulver, enthaltend
a) ein Polymerisat aus der Gruppe der Vinylester-, Vinylester/Ethylen-, (Meth)acrylat- und Styrol/Acrylat-Homo- und Copolymerisate,
b) 1 bis 25 Gew.-%, vorzugsweise 3 bis 12 Gew.-%, bezogen auf die Gesamtmasse des Polymerisats, eines Schutzkolloids,
c) 0,1 bis 10 Gew.-%, vorzugsweise 0,5 bis 3 Gew.-%, bezogen auf die Gesamtmasse des Polymerisats, mindestens eines gesättigten Carbonsäureesters der allgemeinen Formel CₙH₍₂ₙ₊₁₎COOCₘH₍₂ₘ₊₁) mit n = 5 bis 22 und m = 1 bis 8 sowie
d) 0 bis 20 Gew.-%, vorzugsweise 1 bis 15 Gew.-%, bezogen auf die Gesamtmasse des Polymerisats, Antibackmittel.

Geeignete Vinylester-Polymerisate a) sind vorzugsweise Vinylacetat-Homopolymere oder Copolymere des Vinylacetats mit Ethylen und/oder weiteren Vinylestern, wie Vinylpropionat, Vinylpivalat, Vinylester von ®Versatic-Säure 9, 10 oder 11 (Shell-Chemie, α,α-Dialkyl-verzweigte Carbonsäuren), Vinyl-2-ethylhexanoat und/oder Estern der Acrylsäure und/oder Methacrylsäure mit geradkettigen, verzweigten oder cyclischen Alkoholen mit 1 bis 22 Kohlenstoffatomen, insbesondere 1 bis 12 Kohlenstoffatomen.

Geeignete (Meth)acrylat- und Styrol-(Meth)acrylat-Polymerisate a) sind vorzugsweise Polymerisate aus Styrol und/oder Estern der Acrylsäure und/oder Methacrylsäure mit geradkettigen, verzweigten oder cyclischen aliphatischen Alkoholen mit 1 bis 22 Kohlenstoffatomen, insbesondere 1 bis 12 Kohlenstoffatomen.

Als Schutzkolloid b) kommen übliche Schutzkolloide, beispielsweise Celluloseether, wasserlösliche Stärke, Polyvinylpyrrolidon und Polycarbonsäure, vorzugsweise Polyvinylalkohol in Frage. Der Polymerisationsgrad des Polyvinylalkohols liegt vorzugsweise bei 200 bis 3500, insbesondere zwischen 500 und 3000. Der Hydrolysegrad beträgt vorzugsweise 80 bis 98 Mol-%, insbesondere 85 bis 95 Mol-%.

Als Carbonsäureester c) der Formel CₙH₍₂ₙ₊₁)COOCₘH₍₂ₘ₊₁₎ werden vorzugsweise solche mit n = 11 bis 19 und m = 2 bis 6 eingesetzt, insbesondere Stearinsäure-n-butylester, Stearinsäure-i-butylester, Palmitinsäure-n-butylester, Palmitinsäure-i-propylester, Palmitinsäureethylester, Myristinsäure-i-propylester, Myristinsäureethylester, Laurinsäure-n-butylester.

Geeignete Antibackmittel d) sind vorzugsweise Aluminiumsilikate, Calciumcarbonate oder Kieselsäuren sowie insbesondere basische Verwachsungen von Talk und Dolomit. Die Antibackmittel besitzen vorzugsweise eine Teilchengröße von 0,001 bis 0,5 mm.

Das Dispersionspulver enthält gegebenenfalls weitere Additive aus der Gruppe der Zementverflüssiger wie Melaminformaldehydkondensate, Netzmittel wie Alkylpolyglykole, Weichmacher wie Dibutylphthalat oder Dispersionsentschäumer wie Polyethersiloxane.

Ein weiterer Gegenstand der vorliegenden Erfindung ist ein Verfahren zur Herstellung des Dispersionspulvers nach Anspruch 1 durch Vermischen einer Dispersion aus Polymerisat a) und Schutzkolloid b) mit dem Carbonsäureester c) und optional weiterem b) und anschließendes Trocknen der erhaltenen Mischung gegebenenfalls unter gleichzeitigem Zumischen des Antibackmittels d).

Die Herstellung des Polymerisats a) erfolgt nach allgemein bekannten Methoden, vorzugsweise durch Emulsionspolymerisation der entsprechenden Monomeren mittels eines Radikalstarters.

Die Herstellung der entsprechenden Dispersionspulver erfolgt vorzugsweise durch Sprühtrocknung der Dispersion des Polymerisats a) in einem Sprühturm. Die Versprühung erfolgt bekannterweise mit einer Zweistoffdüse oder einer Rotationsscheibe bei einer Temperatur des Trockengases zwischen 100 und 180 °C. Zur Erhöhung der Lagerstabilität und der Rieselfähigkeit des Dispersionspulvers wird vorzugsweise ein Antibackmittel d) parallel zur Dispersion in den Sprühturm eingebracht, so daß es zu einer bevorzugten Ablagerung des Antibackmittels auf den Dispersionsteilchen kommt.

Auf Basis der genannten Methode erhält man gut redispergierbare Dispersionspulver, die sich besonders für den Einsatz in Mörtel und Betonen eignen.

Gegenstand der Erfindung ist auch die Verwendung der erfindungsgemäßen Dispersionspulver zur Modifizierung von Mörtel oder Beton.

Durch Zusatz der erfindungsgemäßen Dispersionspulver zu Mörtel beziehungsweise Beton wird die Biegezugfestigkeit, Druckfestigkeit und Haftungsfestigkeit des abgebundenen Baustoffs erhöht und gleichzeitig der Luftgehalt im Mörtel beziehungsweise Beton gezielt eingestellt.

### Beispiele

Die in den Beispielen angeführten Teile und Prozente beziehen sich auf das Gewicht, soweit nicht anders vermerkt.

### Dispersion 1:

Polyvinylalkohol-stabilisierte Vinylacetat-Ethylen-Copolymer-Dispersion mit einem Feststoffgehalt von ca. 54 %.

### Dispersion 2:

Polyvinylalkohol-stabilisierte Vinylacetat/Versaticsäurevinylester-Copolymer-Dispersion (Versaticsäurevinylester, beispielsweise ®VeoVa10 (Shell-Chemie)) mit einem Feststoffgehalt von ca. 50 %.

### Dispersion 3:

Polyvinylalkohol-stabilisierteVinylacetat/Versaticsäurevinylester/Butylacrylat-Terpolymer-Dispersion (Versaticsäurevinylester, beispielsweise VeoVa10) mit einem Feststoffgehalt von ca. 43 %.

### Dispersion 4:

Polyvinylalkohol-stabilisierte Methylmethacrylat/Butylacrylat-Copolymer-Dispersion mit einem Feststoffgehalt von ca. 46 %.

### Versprühhilfe:

Polyvinylalkohol mit einem Verseifungsgrad von 88 Mol-% und einer Höppler-Viskosität in 4%iger wäßriger Lösung von 4mPa·s (nach DIN 53015).

### Beispiel 1:

Zu 1000 g Dispersion 1 werden 11,6 g Polyvinylalkohol in 60 g Wasser sowie 5,5 g Stearinsäure-i-butylester zugemischt. Dann wird durch Zugabe von Wasser eine Versprühviskosität von ca. 400 mPa·s (nach Haake, bei D =17,93 s⁻¹) eingestellt. Die Mischung wird mit Hilfe einer Zweistoffdüse versprüht. Während des Versprühens wird ein Antiblockmittel (basisches Antiblockmittel, Verwachsung von Talk und Dolomit) so zudosiert, daß der gewichtsprozentige Anteil des Antiblockmittels im Dispersionspulver 11 % beträgt. Man erhält ein lagerstabiles, gut rieselfähiges Pulver.

### Beispiel 2:

Es wird analog Beispiel 1 verfahren, jedoch werden statt 5,5 g Stearinsäure-i-butylester 5,5 g Stearinsäure-n-butylester eingesetzt.

### Beispiele 3-8:

Es wird analog Beispiel 1 verfahren, jedoch werden statt 5,5 g Stearinsäure-i-butylester 1,4 g (Bsp.3), 2,8 g (Bsp.4), 4,1 g (Bsp.5), 5,5 g (Bsp.6), 6,9 g (Bsp.7) bzw. 8,2 g (Bsp.8) einer 1:1 Mischung aus Stearinsäure-n-butylester und Palmitinsäure-n-butylester eingesetzt.

### Beispiel 9

Es wird analog Beispiel 1 verfahren, jedoch werden statt 5,5 g Stearinsäure-i-butylester 5,5 g Palmitinsäure-ethylester eingesetzt.

### Beispiel 10

Es wird analog Beispiel 1 verfahren, jedoch werden statt 5,5 g Stearinsäure-i-butylester 5,5 g Myristinsäure-ethylester eingesetzt.

### Vergleichsbeispiel 1:

Es wird analog Beispiel 1 verfahren, jedoch wird kein Stearinsäure-i-butylester zugesetzt.

### Beispiel 11:

Zu 1000 g Dispersion 2 werden 12 g Polyvinylalkohol in 60 g Wasser sowie 5,12 g einer 1:1-Mischung aus Stearinsäure-i-butylester und Palmitinsäure-n-butylester zugemischt. Dann wird durch Zugabe von Wasser eine Versprühviskosität von ca. 400 mPa·s (nach Haake, bei D =17,93 s⁻¹) eingestellt. Die Mischung wird mit Hilfe einer Zweistoffdüse versprüht. Während des Versprühens wird ein Antiblockmittel (basisches Antiblockmittel, Verwachsung von Talk und Dolomit) so zudosiert, daß der Anteil des Antiblockmittels im Dispersionspulver 11 % beträgt. Man erhält ein lagerstabiles, gut rieselfähiges Pulver.

### Beispiel 12:

Es wird analog Beispiel 11 verfahren, jedoch werden statt 5,12 g einer 1:1-Mischung aus Stearinsäure-i-butylester und Palmitinsäure-n-butylester 5,12 g Myristinsäure-i-propylester eingesetzt.

### Vergleichsbeispiel 2:

Es wird analog Beispiel 11 verfahren, jedoch wird keine 1:1-Mischung aus Stearinsäure-i-butylester und Palmitinsäure-n-butylester zugesetzt.

### Beispiel 13:

Zu 1000 g Dispersion 3 werden 10,75 g Polyvinylalkohol in 60 g Wasser sowie 4,4 g Palmitinsäure-i-propylester zugemischt. Dann wird durch Zugabe von Wasser eine Versprühviskosität von ca. 400 mPa·s (nach Haake, bei D =17,93s⁻¹) eingestellt. Die Mischung wird mit Hilfe einer Zweistoffdüse versprüht. Während des Versprühens wird ein Antiblockmittel (basisches Antiblockmittel, Verwachsung von Talk und Dolomit) so zudosiert, daß der gewichtsprozentige Anteil des Antiblockmittels im Dispersionspulver 11 % beträgt. Man erhält ein lagerstabiles, gut rieselfähiges Pulver.

### Beispiel 14:

Es wird analog Beispiel 13 verfahren, jedoch werden statt 4,4 g Palmitinsäure-i-propylester 4,4 g Laurinsäure-n-butylester eingesetzt.

### Vergleichsbeispiel 3:

Es wird analog Beispiel 13 verfahren, jedoch werden keine 4,4 g Palmitinsäure-i-propylester zugesetzt.

### Beispiel 15:

Zu 1000 g Dispersion 4 werden 23 g Polyvinylalkohol in 80 g Wasser sowie 4,8 g einer 1:1 Mischung aus Palmitinsäure-i-propylester und Laurinsäure-n-butylester zugemischt. Dann wird durch Zugabe von Wasser eine Versprühviskosität von ca. 400mPa·s (nach Haake, bei D=17,93 s⁻¹) eingestellt. Die Mischung wird mit Hilfe einer Zweistoffdüse versprüht. Während des Versprühens wird ein Antiblockmittel (basisches Antiblockmittel, Verwachsung von Talk und Dolomit) so zudosiert, daß der Anteil des Antiblockmittels im Dispersionspulver 15 % beträgt. Man erhält ein lagerstabiles, gut rieselfähiges Pulver.

### Beispiel 16:

Es wird analog Beispiel 15 verfahren, jedoch werden statt 4,8 g einer 1:1 Mischung aus Palmitinsäure-i-propylester und Laurinsäure-n-butylester 4,8 g einer 1:1 Mischung aus Myristinsäure-i-propylester und Palmitinsäure-ethylester eingesetzt.

### Vergleichsbeispiel 4:

Es wird analog Beispiel 15 verfahren, jedoch wird keine 1:1 Mischung aus Palmitinsäure-i-propylester und Laurinsäure-n-butylester zugesetzt.

### Anwendungstechnische Ausprüfung:

Der Luftgehalt wird in Anlehnung an DIN 18555 Teil 2 bestimmt.
Dazu werden 1000 g Normsand II, 500 g Normsand I, 500 g Zement CEM I 32,5 R und 50 g Dispersionspulver eingewogen und trocken vorgemischt.
In einem Mischer, wie in DIN EN 196 Teil 1 beschrieben, werden dann 250 g Wasser vorgelegt. In Anlehnung an die DIN EN 196 Teil 1 wird unter einer Rührgeschwindigkeit von 140 U/min die trockene Mischung gleichmäßig und zügig zugegeben. Danach wird 1 min bei 140 U/min, 1 min bei 285 U/min und nochmals 1 min bei 140 U/min gerührt.

Der Luftgehalt des Frischmörtels wird mit einem justierten Prüfgerät vom 1 dm³ Inhalt nach dem Druckausgleichsverfahren gemessen. Das Prüfgerät hat eine Druckkammer, in der ein definierter Druck erzeugt wird. Durch Öffnen eines Überströmventils wird der Druckausgleich zum Probenbehälter, der mit Frischmörtel gefüllt ist, hergestellt. Zur Bestimmung des Luftgehalts wird die Mörtelmischung in das Prüfgerät gefüllt. Das Oberteil des Gerätes wird auf den gesäuberten Schliffrand des Behälters gesetzt und das Gerät geschlossen. Das noch freie Volumen des Gerätes wird mit Wasser ausgefüllt. Die Kammer wird auf den vorgeschriebenen Druck gebracht. Nach erfolgtem Druckausgleich wird der Luftgehalt ermittelt. Der Volumenanteil des Luftgehalts wird in % angegeben, wobei eine Fehlertoleranz von ca. 1 % gegeben ist.

| Dispersionspulver | Gew-% * Carbonsäureester c) | Luftgehalt [%] |
|---|---|---|
| Vergleichsbeispiel 1 | 0 | 29,0 |
| Beispiel 1 | 0,89 | 11,9 |
| Beispiel 2 | 0,89 | 10,4 |
| Beispiel 3 | 0,23 | 23,4 |
| Beispiel 4 | 0,45 | 18,3 |
| Beispiel 5 | 0,66 | 14,3 |
| Beispiel 6 | 0,89 | 13,1 |
| Beispiel 7 | 1,11 | 10,0 |
| Beispiel 8 | 1,32 | 8,0 |
| Beispiel 9 | 0,89 | 15,0 |
| Beispiel 10 | 0,89 | 17,6 |
| Vergleichsbeispiel 2 | 0 | 27,9 |
| Beispiel 11 | 0,89 | 21,5 |
| Beispiel 12 | 0,89 | 11,8 |
| Vergleichsbeispiel 3 | 0 | 23,4 |
| Beispiel 13 | 0,89 | 10,2 |
| Beispiel 14 | 0,89 | 18,1 |
| Vergleichsbeispiel 4 | 0 | 26,3 |
| Beispiel 15 | 0,89 | 14,1 |
| Beispiel 16 | 0,89 | 12,3 |

| | | |
|---|---|---|
| * bezogen auf das Gesamtgewicht des Dispersionspulvers | | |

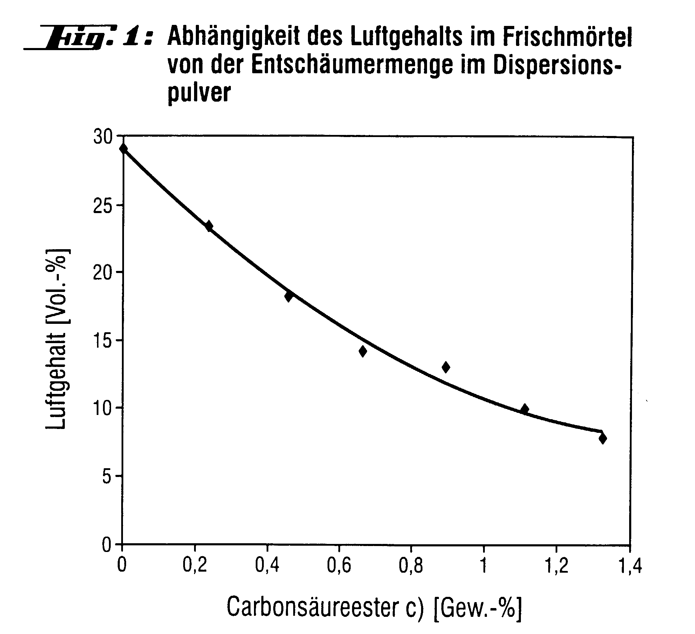

Abbildung 1 (FIG 1) zeigt die Abhängigkeit des Luftgehalts im Frischmörtel gemäß den Beispielen 3 bis 8 und dem Vergleichsbeispiel 1 von der Menge des Carbonsäureesters c), bezogen auf das Gesamtgewicht des Dispersionspulvers. Mit Hilfe des erfindungsgemäßen modifizierten Dispersionspulvers kann der Luftgehalt vorteilhafterweise über einen weiten Bereich nach Wunsch eingestellt werden.

## Patentansprüche

1. Dispersionspulver, enthaltend
a) ein Polymerisat aus der Gruppe der Vinylester-, Vinylester/Ethylen-, (Meth)acrylat- und Styrol/Acrylat-Homo- und Copolymerisate,
b) 1 bis 25 Gew.-%, bezogen auf die Gesamtmasse des Polymerisats, eines Schutzkolloids,
c) 0,1 bis 10 Gew.-%, bezogen auf die Gesamtmasse des Polymerisats, mindestens eines gesättigten Carbonsäureesters der allgemeinen Formel CₙH₍₂ₙ₊₁₎COOCₘH₍₂ₘ₊₁₎ mit n = 5 bis 22 und m = 1 bis 8 und
d) 0 bis 20 Gew.-%, bezogen auf die Gesamtmasse des Polymerisats, Antibackmittel.

2. Dispersionspulver nach Anspruch 1, dadurch gekennzeichnet, daß das Polymerisat a) ein Vinylacetat-Copolymerisat ist.

3. Dispersionspulver nach Anspruch 1, dadurch gekennzeichnet, daß das Schutzkolloid b) Polyvinylalkohol mit einem Polymerisationsgrad von 200 bis 3500 und einem Hydrolysegrad von 80 bis 98 Mol.-% ist.

4. Dispersionspulver nach Anspruch 1, dadurch gekennzeichnet, daß der Carbonsäureester c) der Formel CₙH₍₂ₙ₊₁₎COOCₘH₍₂ₘ₊₁₎ mit n = 11 bis 19 und m = 2 bis 6 genügt.

5. Dispersionspulver nach Anspruch 1, dadurch gekennzeichnet, daß 1 bis 15 Gew.-%, bezogen auf die Gesamtmasse des Polymerisats, Antibackmittel enthalten ist.

6. Dispersionspulver nach Anspruch 1, dadurch gekennzeichnet, daß das Antibackmittel eine basische Verwachsung von Talk und Dolomit ist.

7. Verfahren zur Herstellung des Dispersionspulvers nach Anspruch 1 durch Vermischen einer Dispersion aus Polymerisat a) und Schutzkolloid b) mit dem Carbonsäureester c) und optional weiterem b) und anschließendes Trocknen der erhaltenen Mischung gegebenenfalls unter gleichzeitigem Zumischen des Antibackmittels d).

8. Verfahren nach Anspruch 7, dadurch gekennzeichnet, daß das Trocknen durch Sprühtrocknen in einem Trockenturm erfolgt.

9. Verwendung des Dispersionspulvers nach Anspruch 1 zur Modifizierung von Mörtel oder Beton.

10. Verwendung des Dispersionspulvers nach Anspruch 1 zur Erhöhung der Biegezug-, Druck- oder Haftungsfestigkeit von Mörtel oder Beton.

## Claims

1. A dispersion powder comprising
a) a polymer from the group consisting of vinyl ester, vinyl ester/ethylene, (meth)acrylate and styrene/acrylate homo- and copolymers,
b) 1 to 25% by weight, based on the total weight of the polymer, of a protective colloid,
c) 0.1 to 10% by weight, based on the total weight of the polymer, of at least one saturated carboxylic acid ester of the formula CₙH₍₂ₙ₊₁₎COOCₘH₍₂ₘ₊₁₎ where n = 5 to 22 and m = 1 to 8, and
d) 0 to 20% by weight, based on the total weight of the polymer, of anticaking agent.

2. A dispersion powder as claimed in claim 1, wherein the polymer a) is a vinyl acetate copolymer.

3. A dispersion powder as claimed in claim 1, wherein the protective colloid b) is polyvinyl alcohol having a degree of polymerization of 200 to 3500 and a degree of hydrolysis of 80 to 98 mol%.

4. A dispersion powder as claimed in claim 1, wherein the carboxylic acid ester c) satisfies the formula CₙH₍₂ₙ₊₁₎COOCₘH₍₂ₘ₊₁₎ where n = 11 to 19 and m = 2 to 6.

5. A dispersion powder as claimed in claim 1, which comprises 1 to 15% by weight, based on the total weight of the polymer, of anticaking agent.

6. A dispersion powder as claimed in claim 1, wherein the anticaking agent is a basic intergrowth of talc and dolomite.

7. A process for the preparation of a dispersion powder as claimed in claim 1 by mixing a dispersion of polymer a) and protective colloid b) with the carboxylic acid ester c) and, optionally, further b), and subsequent drying of the resulting mixture, if appropriate with simultaneous admixing of the anticaking agent d).

8. The process as claimed in claim 7, wherein drying is carried out by spray drying in a drying tower.

9. The use of a dispersion powder as claimed in claim 1 for modifying mortar or concrete.

10. The use of a dispersion powder as claimed in claim 1 for increasing the flexural tensile strength, compressive strength or adhesive strength of mortar or concrete.

## Revendications

1. Poudre de dispersion contenant
a) un polymère pris dans le groupe comportant les homo- ou copolymères d'esters vinyliques, d'ester vinylique/éthylène, de (méth)acrylate et de styrène/acrylate,
b) de 1 à 25% en masse, par rapport à la masse totale du polymère, d'un colloïde protecteur,
c) de 0,1 à 10% en masse, par rapport à la masse totale du polymère, d'au moins un ester d'un acide carboxylique saturé de formule générale CₙH₍₂ₙ₊₁₎COOCₘH₍₂ₘ₊₁₎ où n = 5 à 22 et m = 1 à 8, ainsi que
d) de 0 à 20% en masse, par rapport à la masse totale du polymère, d'un agent antimottant.

2. Poudre de dispersion selon la revendication 1, caractérisée en ce que le polymère a) est un copolymère de l'acétate de vinyle.

3. Poudre de dispersion selon la revendication 1, caractérisée en ce que le colloïde protecteur b) est un poly(alcool vinylique) avec un degré de polymérisation de 200 à 3500 et un degré d'hydrolyse de 80 à 98% en moles.

4. Poudre de dispersion selon la revendication 1, caractérisée en ce que l'ester d'acide carboxylique c) répond à la formule CₙH₍₂ₙ₊₁₎COOcₘH₍₂ₘ₊₁₎ où n = 11 à 19 et m = 2 à 6.

5. Poudre de dispersion selon la revendication 1, caractérisée en ce qu'un agent antimottant est contenu en une quantité de 1 à 15% en masse, par rapport à la masse totale du polymère.

6. Poudre de dispersion selon la revendication 1, caractérisée en ce que l'agent antimottant est une concrétion basique du talc et de la dolomite.

7. Procédé de préparation de la poudre de dispersion selon la revendication 1, par mélange d'une dispersion de polymère a) et de colloïde protecteur b) avec l'ester d'acide carboxylique c) et éventuellement d'autres b), et ensuite par séchage du mélange obtenu, éventuellement en ajoutant par mélange simultanément l'agent antimottant d).

8. Procédé selon la revendication 7, caractérisé en ce que l'on réalise le séchage par séchage par pulvérisation dans une colonne d'absorption.

9. Emploi de la poudre de dispersion selon la revendication 1, pour la modification de mortier ou de béton.

10. Emploi de la poudre de dispersion selon la revendication 1 pour augmenter la résistance à la rupture en flexion, à la pression et la force d'adhérence de mortier ou de béton.
